# EUROPEAN PATENT APPLICATION

(11) **EP 2 161 903 A1**
(43) Date of publication of application: **10.03.2010**
(21) Application number: 08290843.5
(22) Date of filing: 08.09.2008
(51) Int. Cl.: H04L 29/08, G06F 17/30

(54) **System for resolving a service to be provisioned to a terminal device a related terminal device and a related service resolving server**

(71) Applicant: Alcatel Lucent, 75008 Paris (FR)
(72) Inventor: Criel, Johan Georges Prosper, 9000 Gent (BE); Godon, Marc Bruno Frieda, 1840 Londerzeel (BE); Brackx, Michael Frederik François Albert, 9000 Gent (BE); van Broeck, Sigurd, 2980 Zoersel (BE); Lou, Zhe, 2000 Antwerp (BE); Trappeniers, Lieven, 2200 Herentals (Noorderwijk) (BE); Claeys, Laurence Annie Hugo Marie, 9000 gENT (BE)
(74) Representative: Vandenbroeck, Josiane Anne Marie

(57) **Abstract**

The present invention relates to a system for resolving a service to be provisioned to a terminal device (TD) by, a service resolving server (SRS). The terminal device is coupled over a communications network (CN) to the service resolving server. The terminal device comprises an auto-identification reader (ARP) for reading an to an object or person associated auto-identification. The system further comprises a context retrieving part (CRP) that is adapted to retrieve context information related to the auto-identification and further a service resolving part (SRP) that is adapted to resolve the service to be provisioned from a plurality of services based on the auto-identification in combination with the context information.

## Description

The present invention relates to a system for resolving a service to be provisioned to a terminal device according to preamble of claim 1, the terminal device according to the preamble of claim 5 and the service resolving server according to the preamble of claim 6.

Such a system for resolving a service to be provisioned to a terminal device is already well known in the art.

The touching and subsequent reading of an auto-identification, such as an RFID tag-identification results in a fixed service, i.e. always the same service is provisioned.

This is due to the fact that the current state of the art technologies allow only a single and fixed association between the auto-identification, such as an RFID tag-identification and a service such as delivery or provisioning of digital content like documents, movies, presentation, photos etc. The resolution of the association can be located in the tag itself or in the network. As an example: an RFID tag put on a bottle of coke is associated with a picture. When touching the tag you will always see the same picture or movie, say the cola commercial of brand Y.

Further there already exist applications where certain specific, static context topics are used to enrich the RFID tag - information association. E.g. for payment not only the RFID identifier (pointing to the object to buy) is sent together with the reference of the bank account is sent to a payment server. The sent context information is however a static and doesn't reflect the dynamic potentials of our solution.

As a consequence nowadays it is not possible to personalize the service provisioning towards a terminal device in a system where the service provisioning is based on an auto-identification associated to an object.

An object of the present invention is to provide a method, system and related devices of the above known type but wherein it is possible to better personalize the service that is related to a certain auto-identification.

According to the invention, this object is achieved by the system described in claim 1, the terminal device described in claim 5 and the service resolving server as described in claim 6.

Indeed due to the fact that context-information is retrieved a service allowing a resolving part to resolve said service to be provisioned to the terminal device from a plurality of services based on said auto-identification in combination with said context information. The context information being any information that can be used to characterize the situation of entities (i.e. whether a person, place, object) that are considered relevant to the interaction between a user and an application, including the user and the application themselves. Context is typically the location, identity, and state of people, groups and computational and physical objects" (Dey, Abowd & Salber, 2001: 97).

Hence the context information allows the service resolving part to differentiate between a plurality of services and resolve the service best suiting to the context of the user associated to the terminal device reading the auto-identification.

An auto-identification is a unique tag-identification that may be associated to an object but in the alternative also to a person or an animal.

Examples of such auto-identification is any tag like Radio Frequency Identification tags, further referred to as RFID-tags, bar- and matrix codes (e.g. Quick Response code (QR code)).

The service to be provisioned to the terminal device may be the sending of digital content such as a movie a picture or a soundtrack towards the terminal device TD, setting up a phone call, making a certain payment, playing a song and/or a movie on a screen with attached speakers associated with the auto-identification etc.

The digital information associated with an RFID tag is context dependant. The resolution happens real-time. This is needed because context can be captured from software or hardware sensors. Moreover some context information can be captured from the environment, other by the mobile device.

This means that the content associated with a tag can vary depending e.g. time, location, the user(s) profile(s), user presence, weather, application context.

Another characteristic feature of the present invention is described in claim 2 and claim 7.

The context retrieving part comprises a first context retrieving part that is located in said terminal device and is adapted to retrieve context information associated to the context of said terminal device. Such context information may be the temperature, light, acceleration, (GPS) location, noise level measured by the terminal device. the presence of other people (with phones) via a Bluetooth communication, a user profile of a user of the terminal device, other physical body-parameters of the terminal device's user like hart-beat frequency, blood pressure etc., all elements being determined for characterizing the relevant parts of the context associated to the terminal device and its user.

Alternatively external sensor can be used to characterize the context of the terminal device as long this context information passes through the terminal device. An example of this situation could be a set of sensors attached to a (dedicated) RFID tag. The (external) sensor information will be passed together with the auto-id (here RFID) to the terminal device. The terminal device treats this (external) sensor information just as the device collected it "internally". An example could be a tin of coke that is equipped with a sensor that measures the temperature of the coke inside the tin. This sensor is attached to an RFID tag that embedded in the tin of coke. When the terminal reads the RFID the temperature is send together with the auto-id. The terminal device TD sends then this ID and temperature information to the receiving part RP just as it would be information collected by one of its own (attached) sensors.

Using this context-information besides the auto-identification allows the server to better match or tailor the service to be provisioned to the terminal device while the context of the terminal device that is parameterized through a at least on sensor in the terminal device or coupled to the terminal device.

Another characteristic feature of the present invention is described in claim 3 and claim 8.

Further the context retrieving part may comprise an additional, second context retrieving part that is located in - or coupled to the service resolving server and is adapted to retrieve context information associated to the context of said auto-identification. This "second context" exist of information that is relevant for the object, animal or person associated with the auto-id but can not be sensed by the terminal device itself. This is for example the case when no sensors exist to capture that type of context or when they are not available (at that time) on the mobile terminal.

The context information retrieved by this second context retrieving part is context information related to the auto-id associated to an object person or animal characterizing this association even better and even better allows the server to better match or tailor the service to be provisioned to the terminal.

An example could be a coke tin equipped with auto-id and temperature sensor. Based on the auto-id and temperature information retrieved by the terminal device (and send to the receiving part RP) an advice (e.g. by a text to speech service on your terminal device) could given that tells you whether or not the context (here temperature) is good to drink you coke, put it in the fridge, etc. This example could however be extended by taking secondary context into account. The advice could e.g. take into account the weather. When it is really sunny warm weather it could advice to drink your coke a bit colder, when it is cold, cloudy weather, to drink another drink made by their company that suits better this type of weather.

Another example could be media associated with a bicycler tour node (actually represented as a pole that is equipped with a little screen and with an auto-id that can be read from a distance of 5 meter). When a cyclist wants to consume the media he moves in the vicinity of the pole. His terminal device will then read the auto-identification and send it together light information (retrieved by one of its internal sensor) to the receiving part RP. The service resolving part SRS will then aggregate this primary context with the information of the road conditions in a range of 1500 meter of the pole (secondary context). Depending on both contexts a different movie will be showed on the screen of the pole. When e.g. the road to the church leaving from the pole is in bad conditions and there is not much light, you will be advice an to go to a lovely bar that can be reached using safe roads and advice you to come back during a sunny day for visiting the church.

It is to be noted that the application of only the second context retrieving part would be an alternative implementation being advantageous as well over our prior art situation wherein only the auto-identification is used for resolving a service.

A further characteristic feature of the present invention is described in claim 4.

The system further comprises a service provisioning part that is adapted to provision said service to said terminal device.

The service to be provisioned to the terminal device may be the sending of digital content such as a movie a picture or a soundtrack towards the terminal device TD, setting up a phone call, making a certain payment, playing a song and/or a movie on a screen with attached speakers associated with the auto-identification.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:

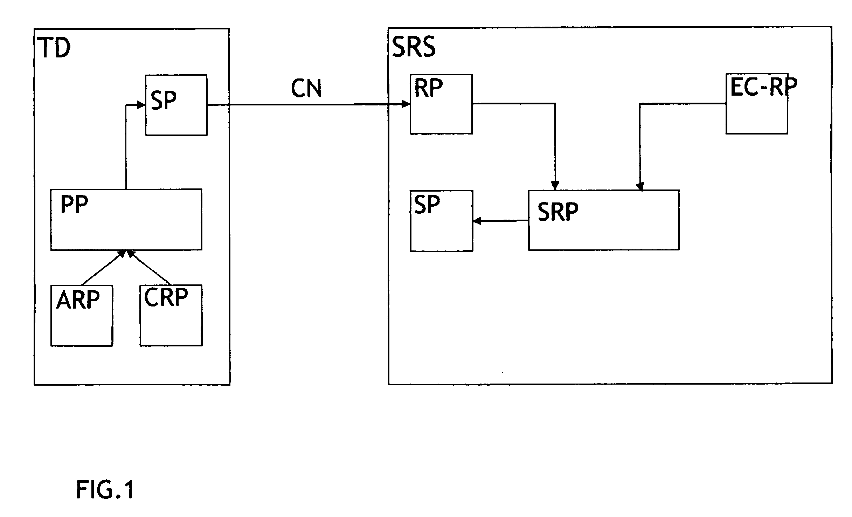

Fig. 1 represents a functional representation of the system for resolving a service to be provisioned to a terminal device according to the present invention.

In the following paragraphs, referring to the drawing of FIG. 1, the system will be described wherein an implementation of the method according to the present invention is executed.

In the first paragraph the elements of the network in the figure are described, in the second paragraph, the interconnections between all before described Network elements are defined. Subsequently all relevant functional means of the mentioned system as presented in FIG.2 are described followed by a description of all interconnections. In the succeeding paragraph the actual execution of the system for resolving a service to be provisioned to a terminal device will be disclosed. The system according to the present invention includes a terminal device TD, which may be a RFID enabled telephone, a personal digital assistant and possibly even a fixed communications device with an auto-identification reader. The auto-identification reader may be a Radio Frequency Identification reader or any other tag reader. The system further comprises a service resolving server SRS that is adapted to resolve a service for provisioning to the terminal device.

The system further comprises a communications network CN like a mobile or fixed telephone communications network, a Voice over IP network or GSM, CDMA coupling the terminal device TD and the service resolving server SRS

The terminal device TD first comprises a auto-identification reading part ARP for reading an associated auto-identification, a context retrieving part CRP that is adapted to retrieve context information associated to the context of the terminal device TD.

The context retrieving part CRP may be a sensor or a set of sensors for determining context where the sensor or the sets of sensors are integrated in the terminal device. Alternatively the sensor or the sets of sensors are located externally to the terminal device TD. Such an external sensor or set of sensors may be coupled to the terminal device over a mobile connection like Bluetooth, ZigBee, infrared, WIFI or read together with the auto-identification when using RFID technology.

Additionally there is a processing part PP that is able to combine the auto-identification read and the context information retrieved for forwarding them in a message to the service resolving server. Finally there is the sending part SP that is adapted to send the auto-identification together with the context-information related to said auto-identification to said service resolving server SRS. The sending part SP may be implemented as a client application that sends a http request towards the service resolving server SRS where the request may contain the combined auto-identification together with the context-information related to the auto-identification. The processing part then may be an application that combines the auto-identification together with the context-information related to the auto-identification.

Such context information associated with the context of the associated device may be the identity of the user, of surrounding persons, the users profile, the weather, the applications context the temperature the heart beat of the user of the terminal device TD.

Both the auto-identification reader ARP and the context retrieving part CRP of the terminal device TD are coupled with an output to an input of the processing part PP that further is coupled to the sending part SP. The Sending part has an output-terminal that is at the same time an output-terminal of the Terminal device TD.

The Service resolving server SRS first comprises a receiving part RP that is adapted to receive an auto-identification read by said terminal device together with context information associated to the context of said terminal device TD forwarded from the terminal device. The auto-identification read by said terminal device together with context information may be incorporated in a http request for carrying the information from the terminal device to the service resolving server SRS.

The receiving part further is adapted to forward an auto-identification read by said terminal device together with context information associated to the context of said terminal device TD towards the service resolving part SRS.

Further, the Service resolving server SRS comprises the service resolving part SRP that is adapted to resolve a service to be provisioned to the terminal device TD from a plurality of services based on an auto-identification retrieved by said terminal device in combination with context information associated to the context of the terminal device and an interpretation of this context information.

There are different possible implementations of the SRP but most of them exist out of two big components. The first one is the knowledgebase/database that aggregates all context information (primary and as well as secondary context). A lot of recent knowledgebase's use semantic models like web resource description language (RDF) and ontology language(OWL) to model the context. They can however also be modeled as java object (like in Drools), facts (prolog), etc. The knowledge base contains in our solution the context surrounding the auto-identification retrieved from sensors that are (externally) attached to the terminal device but also this one retrieved from the second context retrieving part EC-RP. The second component, the reasoner, uses this context knowledge for reasoning upon. It is e.g. possible to ask the reasoner if context conditions (e.g. the coke bottle temperature > 92F AND cloudy) has been met. Based on this reasoning the digital content can be returned. Some reasoners allow also automatically triggering of services when certain context condition has been met. The associations between {auto-id, primary context, secondary context} and the content can then be formulated as rules. These rules have then following format: condition(s) → service trigger.

Additionally, the service resolving server comprises a second context retrieving part (ECRP) that is adapted to retrieve context information on the context of the auto-identification.

Examples of second context information are: weather at the location of the auto-identification, road conditions around a statue equipped with auto-id, traffic report, nuclear radiation reports, user profiles that are stored in an external database or on the web and all kinds of public or private web services that can deliver relevant context information for the object, animal or human associated with the auto-id.

Then the service resolving server comprises a service provisioning part SP that is adapted to provision the service to said terminal device TD.

Such a service may be the sending of digital content such as a movie a picture or a soundtrack towards the terminal device TD, setting up a phone call, making a certain payment, playing a song and/or a movie on a screen with attached speakers associated with the auto-identification.

The Receiving part RP of the Service resolving server SRS has an input-terminal that is at the same time an input-terminal of the service resolving device SRS. The receiving part RP is coupled with an output to an input of the service resolving part SRP. The service resolving part SRP in turn is coupled with an input-terminal to an output-terminal of the second context retrieving part ECRP. The service resolving part SRP further has an output-terminal that is coupled to an input of the service provisioning part SP

In order to explain the actual operation of the present invention in a first embodiment, it is assumed that People can make a trail through the vineyards in Southern France. At different locations on this trail there are little poles with an RFID-tag associated to each of these poles. Such a RFID-tags (auto-identification) can be read from a distance of approximately 5 meter between the RFIF-tag and a RFID-tag reader e.g. integrated in a smart-phone. Depending on the fact whether you are running or walking along the poles different information will be displayed on your mobile.

To make this possible the RFID-tag identification is send together with context information associated with the smart phone. The smart phone additionally includes accelerometers for measuring the steps of the user of the phone taken per minute indicating the walking speed of the user and a heartbeat sensor as a measure of state of body. This information., i.e. the walking speed and the heartbeat frequency will be sent along with the RFID tag identification towards the service resolving server SRS that interprets this data, determines based on the RFID tag identification the pole on the trail and notices based on the walking speed and the heart beat frequency is relatively high. Further, the service resolving server SRS retrieves context information with respect to the mentioned pole on the trail, by means of the context retrieving part ECRP where this context information for instance may be: currently there a works ongoing on the trail for improving the surface of the trail. Hence there may be serious holes in the trial and other circumstances requiring to be careful. Furthermore it is the situation that especially during this time of the year it is very interesting to look at the state of the grapes.

The service resolving server SRS retrieves the before described RFID-tag identification with the before described context information and subsequently interprets the information. Based on all this context information for instance if the heart-beat frequency of the user is high, the walking speed is high the service resolving server SRS may conclude that the user is running and determine that this user may need a warning service being a spoken message on his smart phone pointing the user at the condition of the trail and an advise to watch his feet in order not fall.

In this running situation the user may not be interested in tourist information like a movie on the growing-cycle of the grapes.

Alternatively, if the service resolving server SRS retrieves the before described RFID-tag identification with the before described context information and subsequently interprets the information. Based on all this context information for instance if the heart-beat frequency of the user is relatively low, the walking speed is relatively low as well the service resolving server SRS may conclude that the user is on a tourist walk being very interested in the environment the vineyard and determine that this user may be interested in a video service provisioned to the smart phone and subsequently by means of the service provisioning part sends a video for presentation at he user's smart phone towards the user's smart-phone where the video explains the growing cycle of the grapes.

Here in this embodiment the service resolving server SRS provides different services to the same user being in different situation where the situations are characterised by the context-information retrieved by the server.

In order to explain the actual operation of the present invention in a second embodiment, it is assumed that the city of Antwerp decided to construct a context aware information statue on the grand market. People can touch the statue (that is again is equipped with an RFID tag) with their RFID enabled mobile to retrieve information and commercials about the city. This information is displayed on a big screen that is embedded in the statue and will change upon the number of persons standing around the statue.

Hence the RFID-tag read is forwarded together with the context-information, now being the number of people as well being around the statue. Here for, the user's mobile phone senses by means of Bluetooth interface the number of mobile phones in the immediate surroundings. It is sensed that there is more then five mobile phones in front of the statue. Hence the user's mobile phone forwards the RFID tag together with the number of people in front of the statue (five). The data is forwarded towards the service resolving part SRP of the service resolving server SRS. The service resolving part SRP then determines to forwards a content item about Antwerp towards the big screen of the statue as there is more than 3 people in front of the statue making it more convenient to them to sent the content item about Antwerp to the big screen instead of sending it to the separate screens of the mobile phones of the other people being in front of the statue (assuming of course that they also read the RFID tag).

In order to explain the actual operation of the present invention in a third embodiment, it is assumed that Jan is in walks in the city with his RFID enabled mobile phone. Suddenly he sees a monument that attracts him. He decides to get some more information about the statue. When he touches the tag attached to the monument music starts playing and he sees messages of Marc en Sigurd, two good friends of him, that visited this monument before.

In this case the RFID-tag identification is send together with context information associated with the mobile phone of Jan. This phone additionally includes a user profile of Jan indicating the identity of Jan and friend of Jan, being Marc and Sigurd. This information., i.e. the identity of Jan and the identity of Jan's friend together the RFID tag identification of the tag associated to the statue is forwarded, by means of the sending part of the phone towards the service resolving server SRS, that interprets this data, determines based on the RFID tag identification the statue concerned and notices based on the identity of Jan and the identity of Jan's friends the service to be delivered, i.e. a movie of his friends Marc and Sigurd that once visited the statue in the past.

Two days later An passes the same statue and also touches the tag. Although this is the same tag a different song starts playing and she gets a slide show of her parents visiting that statue 12 years ago.

Her RFID-tag identification, in this situation is send together with context information associated with the mobile phone of AN. This phone additionally includes a user profile of Jan indicating the identity of her family which of course includes her parents. This information, i.e. the identity of her family together the RFID tag identification of the tag associated to the statue is forwarded, by means of the sending part of the phone towards the service resolving server SRS, that interprets this data, determines based on the RFID tag identification the statue concerned and notices based on the identity of An and the identity of An's family the service to be delivered, i.e. a presentation of pictures of her family with associated music. The service resolving server then forwards, by means of the service provisioning part the presentation with music towards An's phone or display the presentation at a screen besides the statue.

In order to explain the actual operation of the present invention in a further embodiment, it is assumed that an object of drinks manufacturer like a cola manufacturer is to deliver better usage feedback to cola drinkers and an embedded an RFID tag-identification with a thermometer in a cola tins. When touching the tag with your mobile the id of the tag + the temperature of the coca cola inside the tin are passed to your mobile and forwarded to the service provisioning server SRS. Depending on the temperature (context) of the coke services will be provided to your mobile phone, in this case the services being different messages will be sent to your mobile. E.g. "Put your coke in the fridge for a while before drinking it when the measured temperature is 10 degrees Celsius or higher; "Ready to drink, enjoy it" if the temperature is in a range of say 5 to 9 degrees Celsius or the message; "Only drink this when you like ice cream" if the temperature is beneath 5 degrees Celsius..

In this scenario the temperature sensor is not located in the mobile phone but located externally to the phone, i.e. in the tin and now the contextual info is not delivered by the mobile but coming along with the RFID info. In addition or alternatively the service resolving server SRS may retrieve additional context information like the current weather in particular the current outdoor temperature and may use this current outdoor temperature in the interpretation of the entire context being for instance cold weather, the service provided may be the being different messages will be send to your mobile. E.g. "Put your coke in the fridge for a while before drinking it when the measured temperature is 13 degrees Celsius or higher; "Ready to drink, enjoy it" if the temperature is in a range of say 8 to 12 degrees Celsius or the message; "Only drink this when you like ice cream" if the temperature is beneath 7 degrees Celsius.

Here in this embodiment the service resolving server SRS provides different services to the same user being in different situation where the situations are characterised by the context-information retrieved by the server, here the context information being the temperature of the drink and the outdoor temperature. It is to be remarked that in case of another drink like a hot drink the context will be interpreted completely different resulting in different services to be provisioned.

Another example could be media associated with a bicycler tour node (actually represented as a pole that is equipped with a little screen and with an auto-id that can be read from a distance of 5 meter). When a cyclist wants to consume the media he moves in the vicinity of the pole. His terminal device will then read the auto-identification and send it together light information (retrieved by one of its internal sensor) to the receiving part RP. The service resolving part SRS will then aggregate this primary context with the information of the road conditions in a range of 1500 meter of the pole (secondary context). Depending on both contexts a different movie will be showed on the screen of the pole. When e.g. the road to the church leaving from the pole is in bad conditions and there is not much light, you will be advice an to go to a lovely bar that can be reached using safe roads and advice you to come back during a sunny day for visiting the church.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. System for resolving a service to be provisioned to a terminal device (TD) by a service resolving server (SRS), said terminal device (TD) being coupled over a communications network (CN) to said service resolving server (SRS), said terminal device (TD) comprising an auto-identification reader (ARP) for reading an associated auto-identification, **CHARACTERISED IN THAT** said system further comprises:
a. a context retrieving part, adapted to retrieve context information; and
b. a service resolving part (SRP), that is adapted to resolve said service from a plurality of services based on said auto-identification in combination with said context information.

2. System for resolving a service for provisioning to a terminal device (TD), according to claim 1, **CHARACTERISED IN THAT** said context retrieving part comprises a first context retrieving part (CRP) located in said terminal device (TD) and adapted to retrieve context information associated to the context of said terminal device (TD).

3. System for resolving a service for provisioning to a terminal device (TD), according to claim 1 or claim 2, **CHARACTERISED IN THAT** said context retrieving part further comprises a second context retrieving part (ECRP) located in said service resolving server (SRS), adapted to retrieve context information associated to the context of said auto-identification.

4. System for resolving a service for provisioning to a terminal device, according to any of claims 1 to 3, **CHARACTERISED IN THAT** said system further comprises a service provisioning part (SP) that is adapted to provision said service to said terminal device (TD).

5. Terminal Device (TD) for use in a system for resolving a service to be provisioned to said terminal device (TD) by a service resolving server (SRS), said terminal device (TD) being coupled over a communications network (CN) to said service resolving server (SRS), said terminal device (TD) comprising:
a. an auto-identification reader (ARP) for reading an associated auto-identification, **CHARACTERIZED IN THAT** said terminal device (TD) further comprises:
b. a context retrieving part (ECRP), adapted to retrieve context information associated to the context of said terminal device; and
c. a sending part (SP), adapted to send said auto-identification together with said context-information related to said auto-identification to said service resolving server (SRS).

6. Service resolving server (SRS) for use in use in a system for resolving a service to be provisioned to a terminal device (TD) by said service resolving server (SRS), said terminal device (TD) being coupled over a communications network (CN) to said service resolving server (SRS), **CHARACTERIZED IN THAT** said service resolving server (SRS) comprises a service resolving part (SRP), adapted to resolve said service from a plurality of services based on an auto-identification retrieved by said terminal device in combination with context information.

7. Service resolving server (SRS) according to claim 6, **CHARACTERISED IN THAT** said service resolving server (SRS) further comprises a receiving part (RP) adapted to receive an auto-identification read by said terminal device together with context information associated to the context of said terminal device (TD) from said terminal device.

8. Service resolving server (SRS) according to claim 7, **CHARACTERISED IN THAT** said service resolving server further comprises a second context retrieving part (ECRP), adapted to retrieve context information associated to the context of said auto-identification.
